# EUROPEAN PATENT APPLICATION

(11) **EP 2 826 700 A1**
(43) Date of publication of application: **21.01.2015**
(21) Application number: 14175757.5
(22) Date of filing: 04.07.2014
(51) Int. Cl.: B62M 6/45

(54) **Motor control system for electric bicycle and method of controlling the same**

(30) Priority: 16.07.2013 KR 20130083742
(71) Applicant: Samsung Electro-Mechanics Co., Ltd., Suwon-si, Gyeonggi-do 443-743 (KR)
(72) Inventor: Kim, Se Joo, 443-743 Gyeonggi-Do (KR); Lee, Geun Ho, 139-785 Seoul (KR); Hong, Bok Young, 443-743 Gyeonggi-Do (KR); Kim, Gyoung Tai, 443-743 Gyeonggi-Do (KR)
(74) Representative: Heine, Christian Klaus

(57) **Abstract**

Disclosed herein is a motor control system for an electric bicycle, the system including: a gradient sensing unit sensing a gradient of a bicycle; a bicycle acceleration sensing unit sensing an acceleration of the bicycle; a pedal acceleration sensing unit sensing an acceleration of a pedal; and a motor drive control unit to control driving of a motor, wherein the motor drive control unit receives sensed values from the gradient sensing unit, the bicycle acceleration sensing unit, and the pedal acceleration sensing unit so as to estimate pedal torque, thereby controlling driving of the motor.

## Description

### CROSS REFERENCE TO RELATED APPLICATION

This application claims the benefit of Korean Patent Application No. 10-2013-0083742, filed on July 16, 2013, entitled "ELETRICITY BIKE CONTROL SYSTEM AND METHOD FOR CONTROL THE SAME," which is hereby incorporated by reference in its entirety into this application.

### BACKGROUND OF THE INVENTION

### 1. Technical Field

The present invention relates to a motor control system for an electric bicycle and a method of controlling the same.

### 2. Description of the Related Art

A bicycle includes a front wheel which is a steering wheel and a rear wheel which is a driving wheel arranged in the line at the front and rear sides of a frame, respectively. A bicycle travels forward as a rider steps down a pedal linked to the rear wheel so as to rotate the rear wheel. In order to transmit power generated by the pedal of a bicycle to the rear wheel, power transmission device such as a chain and a gear is installed.

A chain type power transmission device includes a driving sprocket installed on one side of a pedal, a driven sprocket installed at the rear wheel which is a driving wheel and having a diameter smaller than that of the driving sprocket, and a chain connecting the driving sprocket to the driven sprocket.

In this configuration, when a rider steps down the pedal, the driving sprocket integrated with the pedal is rotated, and at the same time the rear wheel linked to the driven sprocket by the chain is also rotated, such that the bicycle travels forward.

Since a bicycle moves by a rider's pedal effort, it easily travels on a flatland but requires much effort when it goes up a sloped road such as a hill.

To assist the bicyclist, an electric bicycle has been developed recently which moves by using driving force of a motor, in addition to a rider's pedal effort.

In such an electric bicycle, a battery-driven motor is used. The operation of such an electric bicycle is selected among the modes including a mode in which the bicycle moves by a rider's pedal effort, a mode in which it travels only by the power from a battery-driven motor, and a mode in which it moves by both of them.

Existing electric bicycle includes a torque sensor on the shaft of a pedal so that driving force of a motor is automatically adjusted according to a signal output from the torque sensor when it goes up a hill.

Types of torque sensors include a magnetic type torque sensor in which an inductor senses a magnetic field generated as a torsion sensor coil is torsioned and generates voltage, and a strain gauge type torque sensor in which a torsion sensor is installed between a pedal and a crank.

Such torque sensors, however, are very costly. Measuring torque is about sensing torsion of a shaft, and since the amount of torsion is very small, it needs to be precisely amplified.

Further, since a shaft is rotated while a controller that receives information is not rotated, many technologies are required to transmit the information. As a result, a torque sensor is very costly and thus so become electric bicycles.

Moreover, since a torque sensor occupies a large space of the bicycle and requires many installation components when it is installed on the bicycle, so that there is difficulty in installation and maintenance.

Further, the weight of an electric bicycle is increased due to the weight of the torque sensor, so that when the bicycle goes up a sloped road, the assist ratio of a motor increases and thus battery consumption increases.

### [Prior Art Document]

### [Prior Art Document]

(Patent Document 1) Korean Patent Laid-open Publication No. 2012-0132593

### SUMMARY OF THE INVENTION

The present invention has been made in an effort to provide a motor control system for an electric bicycle and a method of controlling the same which control driving of a motor by sensing the gradient of a bicycle, the acceleration of the bicycle, and the acceleration of a pedal so as to estimate pedal torque.

Further, the present invention has been made in an effort to provide a motor control system for an electric bicycle and a method of controlling the same with improved ride comfort.

According to a first preferred embodiment of the present invention, there is provided a motor control system for an electric bicycle, the system including: a gradient sensing unit sensing a gradient of a bicycle; a bicycle acceleration sensing unit sensing an acceleration of the bicycle; a pedal acceleration sensing unit sensing an acceleration of a pedal; and a motor drive control unit to control driving of a motor, wherein the motor drive control unit receives sensed values from the gradient sensing unit, the bicycle acceleration sensing unit, and the pedal acceleration sensing unit so as to estimate pedal torque, thereby controlling driving of the motor.

The motor control system may further include a three-axis acceleration sensor, wherein the gradient sensing unit and the bicycle acceleration sensing unit sense the gradient of the bicycle and the acceleration of the bicycle, respectively, using the three-axis acceleration sensor.

The motor control system may further include a pedal velocity sensor sensing pedal velocity, wherein the pedal acceleration sensing unit senses a pedal acceleration value by differentiating a pedal velocity value received from the pedal velocity sensor.

The pedal velocity sensor may count the rotations of a rotation shaft of the pedal.

The motor control system may further include a memory unit in which a motor assist setting value according to pedal torque is stored, wherein the motor drive control unit compares the estimated pedal torque with the setting value stored in the memory unit so as to control driving of the motor.

According to a second preferred embodiment of the present invention, there is provided a method of controlling a motor control system for an electric bicycle, the method including: sensing a gradient of a bicycle by a gradient sensing unit, an acceleration of the bicycle by a bicycle acceleration sensing unit, and an acceleration of a pedal by a pedal acceleration sensing unit; and controlling, by a motor drive control unit, driving of a motor by receiving the sensed values from the gradient sensing unit, the bicycle acceleration sensing unit, and the pedal acceleration sensing unit to estimate pedal torque.

The sensing may include sensing the gradient of the bicycle and the acceleration of the bicycle by the gradient sensing unit and the bicycle acceleration sensing unit, respectively, using a three-axis acceleration sensor.

The sensing may include obtaining, by the pedal acceleration sensing unit, a pedal acceleration by differentiating a pedal velocity value received from a pedal velocity sensor to sense a pedal velocity.

The pedal velocity sensor may count the rotations of a rotation shaft of the pedal.

The controlling may include comparing, by the motor drive control unit, the estimated pedal torque with the setting value stored in a memory unit so as to control driving of the motor.

### BRIEF DESCRIPTION OF THE DRAWINGS

The above and other objects, features and advantages of the present invention will be more clearly understood from the following detailed description taken in conjunction with the accompanying drawings, in which:
FIG. 1 is a view of an electric bicycle employing a motor control system for an electric bicycle according to a preferred embodiment of the present invention; and
FIG. 2 is a diagram of a motor control system for an electric bicycle according to a preferred embodiment of the present invention.

### DESCRIPTION OF THE PREFERRED EMBODIMENTS

The objects, features and advantages of the present invention will be more clearly understood from the following detailed description of the preferred embodiments taken in conjunction with the accompanying drawings. Throughout the accompanying drawings, the same reference numerals are used to designate the same or similar components, and redundant descriptions thereof are omitted. Further, in the following description, the terms "first," "second," "one side," "the other side" and the like are used to differentiate a certain component from other components, but the configuration of such components should not be construed to be limited by the terms. Further, in the description of the present invention, when it is determined that the detailed description of the related art would obscure the gist of the present invention, the description thereof will be omitted.

Hereinafter, preferred embodiments of the present invention will be described in detail with reference to the attached drawings.

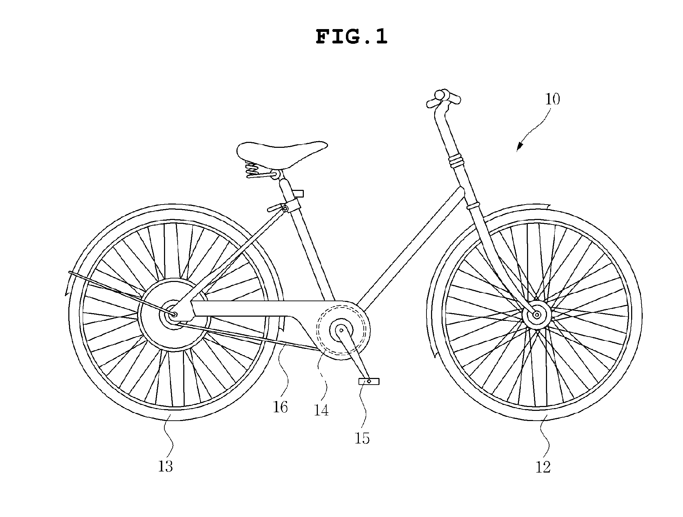

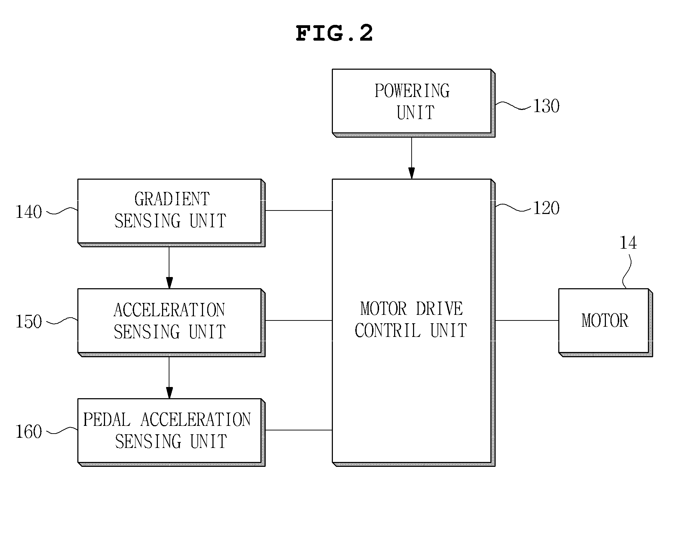

FIG. 1 is a view of an electric bicycle employing a motor control system for an electric bicycle according to a preferred embodiment of the present invention; and FIG. 2 is a diagram of a motor control system for an electric bicycle according to a preferred embodiment of the present invention.

Referring to FIGS. 1 and 2, a motor control system for an electric bicycle according to a preferred embodiment of the present invention includes a gradient sensing unit 140, a bicycle acceleration sensing unit 150, a pedal acceleration sensing unit 160, and a motor drive control unit 120, to drive a motor 14.

The front wheel 12 and the rear wheel 13 of the electric bicycle 10 is supported by a frame (not shown), and the chain 16 that is rotated by power transmission means is engaged with the rear wheel. The power transmission means may include a pedal 15 and a motor 14. Here, the pedal 15 is rotated when a rider applies forces and transmits the rotation force to the chain 16. Further, the motor 14 is connected to a powering unit 130 and the shaft of the motor 14 is rotated upon being powered so as to transmit the rotation force to the chain 16. Here, when a rider applies force to the pedal 15 so that the electric bicycle 10 travels, the motor 14 assists the rider's pedal-power so that the rider may easily go up a hill and the like even if she or he pedals with less force.

The specific configuration to transmit the rotation force by the pedal 15 or the motor 14 to the chain 16 is well known in the art, and therefore descriptions thereon will not be made herein.

The gradient sensing unit 140 senses the gradient of the electric bicycle 10 so as to transmit the sensed value, i.e., a gradient value of the bicycle to the motor drive control unit 120.

The bicycle acceleration sensing unit 150 senses the acceleration of the electric bicycle 10 so as to transmit the sensed value, i.e., an acceleration value of the bicycle to the motor drive control unit 120.

In addition, the motor control system for an electric bicycle according to a preferred embodiment of the present invention may further include a three-axis acceleration sensor to sense the gradient and acceleration of the electric bicycle 10 and transmit the sensed value to the gradient sensing unit 140 and the bicycle acceleration sensing unit 150.

Here, the three-axis acceleration sensor measures accelerations on x-, y-, and z- axes, to sense the gradient and the acceleration of the bicycle.

The pedal acceleration sensing unit 160 senses the acceleration of the pedal 15 so as to transmit the sensed value, i.e., an acceleration value of the pedal to the motor drive control unit 120.

In addition, the motor control system for an electric bicycle according to a preferred embodiment may further include a pedal velocity sensor to sense the velocity of the pedal 15. The pedal acceleration sensing unit 160 may obtain a pedal acceleration value by differentiating the pedal velocity value transmitted from the pedal velocity sensor. Here, the pedal velocity sensor may be provided, for example, at the frame of the electric bicycle 10 to count the rotations of the rotation shaft of the pedal 15.

The motor drive control unit 120 may receive the sensed values from the gradient sensing unit 140, the bicycle acceleration sensing unit 150, and the pedal acceleration sensing unit 160 to estimate pedal torque, thereby controlling the driving of the motor 14. Here, the motor drive control unit 120 may control the diving of the motor 14 by turning on/off application of electricity to the motor 14 from the powering unit 130. The powering unit may be a battery, for example.

In addition, the motor drive control unit 120 may control the driving of the motor 14 by comparing the estimated pedal torque value with a motor assist setting value stored in a memory unit (not shown). Although the memory unit may be included in the motor drive control unit 120, the present invention is not limited thereto. For example, the memory unit may be provided separately from the motor drive control unit 120 and may be electrically connected thereto.

According to the motor control system for an electric bicycle according to the preferred embodiment of the present invention, the motor drive control unit 120 may estimate pedal torque based on the sensed values from the gradient sensing unit 140, the bicycle acceleration sensing unit 150, and the pedal acceleration sensing unit 160 so as to control the driving of the motor 14, thereby adjusting the ratio of motor assist. By doing so, torque may be calculated without using a costly torque sensor, so that manufacturing cost can be saved and the weight of the bicycle can be reduced. In addition, ride comfort can be improved.

Referring to FIGS. 1 and 2, a method of controlling a motor for an electric bicycle according to a preferred embodiment of the present invention includes sensing the gradient of a bicycle, the acceleration of the bicycle, and the acceleration of a pedal, and controlling the driving of the motor 14.

Hereinafter, the method of controlling a motor for an electric bicycle according to a preferred embodiment of the present invention will be described in more detail with reference to FIGS. 1 and 2.

Referring to FIG. 2, the sensing includes sensing the gradient of the electric bicycle 10 by the gradient sensing unit 140, sensing the acceleration of the electric bicycle 10 by the bicycle acceleration sensing unit 150, and sensing the acceleration of the pedal 15 of the electric bicycle 10 by the pedal acceleration sensing unit 160.

The gradient sensing unit 140 senses the gradient of the electric bicycle 10 so as to transmit the sensed value, i.e., a gradient value of the bicycle to the motor drive control unit 120.

The bicycle acceleration sensing unit 150 senses the acceleration of the electric bicycle 10 so as to transmit the sensed value, i.e., an acceleration value of the bicycle to the motor drive control unit 120. Here, the gradient sensing unit 140 and the bicycle acceleration sensing unit 150 may sense the gradient of the bicycle and the acceleration of the bicycle via a three-axis acceleration sensor. Here, the three-axis acceleration sensor measures accelerations on x-, y-, and z- axes, to sense the gradient and the acceleration of the electric bicycle 10.

The pedal acceleration sensing unit 160 senses the acceleration of the pedal 15 so as to transmit the sensed value, i.e., an acceleration value of the pedal to the motor drive control unit 120. The pedal acceleration sensing unit 160 may obtain a pedal acceleration value by differentiating the pedal velocity value transmitted from the pedal velocity sensor. Here, the pedal velocity sensor may be provided, for example, on one side of the frame of the electric bicycle 10 to count the rotations of the rotation shaft the pedal 15.

The controlling includes receiving, by the motor drive control unit 120, the sensed values from the gradient sensing unit 140, the bicycle acceleration sensing unit 150, and the pedal acceleration sensing unit 160 to estimate pedal torque, thereby controlling the driving of the motor 14. Here, the motor drive control unit 120 may control the diving of the motor 14 by turning on/off applying electricity to the motor 14 from the powering unit 130. The powering unit 130 may be a battery, for example.

In addition, the motor drive control unit 120 may control the driving of the motor 14 by comparing the estimated pedal torque value with a motor assist setting value stored in a memory. Although the memory unit may be included in the motor drive control unit 120, the present invention is not limited thereto. For example, the memory unit may be provided separately from the motor drive control unit 120 and may be electrically connected thereto.

According to the method of controlling a motor for an electric bicycle according to the preferred embodiment of the present invention, pedal torque may be estimated by the motor drive control unit 120 based on the sensed values from the gradient sensing unit 140, the bicycle acceleration sensing unit 150, and the pedal acceleration sensing unit 160 so as to control the driving of the motor 14, thereby adjusting the motor assist. Accordingly, ride comfort can be improved. Further, torque may be calculated without using a costly torque sensor, so that manufacturing cost can be saved and the weight of the bicycle can be reduced.

As set forth above, according to preferred embodiments of the present invention, driving of a motor is controlled by sensing the gradient of a bicycle, the acceleration of the bicycle, and the acceleration of a pedal so as to estimate pedal torque, such that torque can be calculated without using a costly torque sensor.

Accordingly, cost can be significantly saved, the space occupied by a torque sensor can be reduced. Further, the weight of an electric bicycle can be reduced, and less electricity is used for driving a motor, battery use time for driving the motor can be extended.

Additionally, ride comfort can be improved by controlling driving of a motor by calculating torque.

Although the embodiments of the present invention have been disclosed for illustrative purposes, it will be appreciated that the present invention is not limited thereto, and those skilled in the art will appreciate that various modifications, additions and substitutions are possible, without departing from the scope and spirit of the invention.

Accordingly, any and all modifications, variations or equivalent arrangements should be considered to be within the scope of the invention, and the detailed scope of the invention will be disclosed by the accompanying claims.

## Claims

1. A motor control system for an electric bicycle, the system comprising:
a gradient sensing unit sensing a gradient of a bicycle;
a bicycle acceleration sensing unit sensing an acceleration of the bicycle;
a pedal acceleration sensing unit sensing an acceleration of a pedal; and
a motor drive control unit to control driving of a motor,
wherein the motor drive control unit receives sensed values from the gradient sensing unit, the bicycle acceleration sensing unit, and the pedal acceleration sensing unit so as to estimate pedal torque, thereby controlling driving of the motor.

2. The motor control system as set forth in claim 1, further comprising a three-axis acceleration sensor,
wherein the gradient sensing unit and the bicycle acceleration sensing unit sense the gradient of the bicycle and the acceleration of the bicycle, respectively, using the three-axis acceleration sensor.

3. The motor control system as set forth in claim 1, further comprising a pedal velocity sensor sensing pedal velocity,
wherein the pedal acceleration sensing unit senses a pedal acceleration value by differentiating a pedal velocity value received from the pedal velocity sensor.

4. The motor control system as set forth in claim 3, wherein the pedal velocity sensor counts the rotations of a rotation shaft of the pedal.

5. The motor control system as set forth in claim 1, further comprising a memory unit in which a motor assist setting value according to pedal torque is stored,
value stored in the memory unit so as to control driving of the motor.

6. A method of controlling a motor control system for an electric bicycle, the method comprising:
sensing a gradient of a bicycle by a gradient sensing unit, an acceleration of the bicycle by a bicycle acceleration sensing unit, and an acceleration of a pedal by a pedal acceleration sensing unit; and
controlling, by a motor drive control unit, driving of a motor by receiving the sensed values from the gradient sensing unit, the bicycle acceleration sensing unit, and the pedal acceleration sensing unit to estimate pedal torque.

7. The method as set forth in claim 6, wherein the sensing includes sensing the gradient of the bicycle and the acceleration of the bicycle by the gradient sensing unit and the bicycle acceleration sensing unit, respectively, using a three-axis acceleration sensor.

8. The method as set forth in claim 6, wherein the sensing includes obtaining, by the pedal acceleration sensing unit, a pedal acceleration by differentiating a pedal velocity value received from a pedal velocity sensor to sense a pedal velocity.

9. The method as set forth in claim 8, wherein the pedal velocity sensor counts the rotations of a rotation shaft of the pedal.

10. The method as set forth in claim 6, wherein the controlling includes comparing, by the motor drive control unit, the estimated pedal torque with the motor assist setting value stored in a memory unit so as to control driving of the motor.
